# EUROPÄISCHE PATENTSCHRIFT

(11) **EP 2 659 079 B1**
(45) Veröffentlichungstag und Bekanntmachung des Hinweises auf die Patenterteilung: **15.03.2017**
(21) Anmeldenummer: 11846059.1
(22) Anmeldetag: 30.12.2011
(51) Int. Cl.: E06B 3/54, F16F 7/12

(54) **HALTEVORRICHTUNG FÜR FLÄCHENELEMENTE**
HOLDING DEVICE FOR FLAT ELEMENTS
DISPOSITIF DE RETENUE D'ÉLÉMENTS PLATS

(30) Priorität: 30.12.2010 DE 102010056502
(43) Veröffentlichungstag der Anmeldung: 06.11.2013
(73) Patentinhaber: Josef Gartner GmbH, 89423 Gundelfingen (DE)
(72) Erfinder: WELLERSHOFF, Frank, 22299 Hamburg (DE)
(74) Vertreter: advotec.
(86) Internationale Anmeldenummer: PCT/DE2011/002191
(87) Internationale Veröffentlichungsnummer: WO 2012/097779

(56) Entgegenhaltungen:
- WO-A1-01/63082
- WO-A1-99/63193
- DE-A1- 19 519 527
- DE-A1- 19 713 678
- FR-A1- 2 676 768

## Beschreibung

Die Erfindung betrifft eine Haltevorrichtung nach dem Oberbegriff des Anspruchs 1.

Gattungsgemäße Haltevorrichtungen werden beispielsweise, jedoch keinesfalls ausschließlich, im Fassadenbau verwendet, um Flächenelemente, insbesondere Scheiben und Platten, mit anderen Teilen eines Gebäudes, insbesondere mit dafür vorgesehenen Befestigungsmöglichkeiten einer Unterkonstruktion, zu verbinden und somit großflächige Fassaden bzw. Fassadenelemente zu bilden.

Bei bekannten Haltevorrichtungen zur Befestigung an einer Befestigungsunterkonstruktion einerseits und zur Befestigung von zumindest einem Flächenelement andererseits werden im Allgemeinen und in grundsätzlich bekannter Weise Vorkehrungen getroffen, um die Kräfte, welche parallel zu den Ebenen, welche durch die Flächenelemente gebildet werden, an den Haltevorrichtungen angreifen bzw. anliegen, über die Haltevorrichtung abzuleiten und in die darunter liegende bzw. dahinterliegende Struktur, wie beispielsweise Gebäudewände, zu übertragen. Dazu kann in bekannter Weise vorgesehen sein, dass die Haltevorrichtung mit einer Unterkonstruktion verknüpft ist, die ihrerseits wiederum mit einer Grundstruktur, wie beispielsweise einem Mauer- bzw. Wand- oder Deckenelement, verknüpft ist. Bei den Kräften, die mittels der bekannten Haltevorrichtungen an eine Grundstruktur abgeleitet werden können, handelt es sich beispielsweise um die Gewichtskräfte der Flächenelemente bzw. die Eigengewichtlasten der Flächenelemente.

Bei der Verwendung bekannter Haltevorrichtungen kann es mit unter dazu kommen, dass besonders großflächige Flächenelemente befestigt bzw. gehalten werden sollen. Dies kann sowohl aus konstruktiven sowie auch aus ästhetischen Gründen erfolgen. Mit zunehmender Größe der befestigten Flächenelemente wachsen jedoch auch die Kräfte, die senkrecht auf die Ebene der Flächenelemente einwirken. Für das Beispiel einer Haltevorrichtung im Bereich des Fassadenbaus seien beispielhaft die Druckkräfte bzw. die Zugkräfte auf die Flächenelemente in der Folge von Windböen bzw. Windströmungen oder aber auch extremere Kräfte, wie beispielsweise bei einer Explosion, genannt. Derartige Kräfte können grundsätzlich und mit steigender Größe der Flächenelemente in besonderem Umfang die Belastungsgrenzen der Flächenelemente übersteigen und damit zu einer Beschädigung der Flächenelemente führen, was wiederum zu kostspieligen und zeitaufwändigen Wartungstätigkeiten führt.

Die DE 197 13 678 A1 beschreibt einen Klemmbeschlag für die Befestigung von Glasscheiben, bei dem radial um ein Querkraftaufnahmemittel eine mit Spiel versehene Ausgleichsbuchse angeordnet ist, die wiederum über eine Nut verfügt. In dieser Nut sind zwei O-Ringe angeordnet, zwischen denen eine Feder eines Spannelements bzw. einer Verstellmutter ebenfalls in die Nut der Ausgleichsbuchse eingreift. Dadurch können die O-Ringe Kräfte die senkrecht zur Ebene der Glasscheibe einwirken bis zu einem gewissen Grad aufnehmen. Die Konstruktion umfassend die Aufnahmebuchse, die O-Ringe und die Verstellmutter ist dabei jedoch kompliziert und fehler- bzw. wartungsanfällig.

Die FR 2 676 768 A1 offenbart eine Haltevorrichtung für großflächige Glasscheiben, dessen Querkraftaufnahmemittel zweiteilig ausgeführt ist und an den aneinander angrenzenden Enden der zwei Teile jeweils einen Teil eine Gehäusehälfte aufweist. Die zwei Teile des Querkraftaufnahmemittels und damit auch die Gehäusehälften sind dabei gegeneinander beweglich. Zur Aufnahme von Kräften, die senkrecht zu der Ebene der Glasscheiben einwirken ist vorgesehen, dass in den Gehäusehälften ein Federelement angeordnet und jeweils mit einer Gehäusehälfte verbunden ist. Durch die zweiteilige Ausführung des Querkraftaufnahmemittels wird dessen Stabilität insgesamt nachteilig beeinflusst. Zudem nimmt die Vorrichtung durch die Gehäusehälften viel Platz in Anspruch.

Die WO 01/63082 A1 handelt von einer Verbindungsbrücke zur Verbindung von Glaswandsegmenten, die mit Solarpaneelen ausgestattet sind, wobei Verbindungsbrücke wiederum eine Mehrzahl von Klemmbeschlägen vorsehen kann. Die einzelnen Klemmbeschläge sehen dabei mehrere Teile zur Übertragung der Querkraft auf. Zwischen zwei derartiger Teile ist dabei ein Federmittel in Form eines Trichters vorgesehen, der Kräfte, die Senkrecht zur Ebene der Glaswandsegmenten einwirken abfedern können. Auch hier ist die Stbilität des Klemmbeschlags durch die mehrteilige Ausführung und die dadurch nur mittelbar erfolgte Aufnahme der Querkräfte begrenzt.

Auch die WO 99/63193 A1 sieht eine entsprechende Befestigungsvorrichtung für eine Glasplatte an einer gebäudeseitigen Halterung vor, die ebenfalls ein mehrteiliges Querkraftaufnahmemittel aufweist. Auch hier ist zwischen zwei Teilen des Querkraftaufnahmemittels eine Trichterförmige Federeinrichtung angeordnet, um Kräfte senkrecht zur Ebene der Glasplatte abzufedern.

Die DE 195 19 527 A1 lehrt zudem eine Halterung für Platten, welche eine Tellerfeder vorsieht und die Bewegungen der Platte in Plattenlängsrichtung und Drehbewegungen um ein Schwenkzentrum erlaubt.

Ausgehend von diesem Stand der Technik ist es Aufgabe der vorliegenden Erfindung, eine Haltevorrichtung vorzuschlagen, mit der die daran befestigten Flächenelemente größeren externen Krafteinwirkungen ausgesetzt werden können, ohne dass die Gefahr einer Beschädigung und/oder Ermüdung der Flächenelemente und/oder eine Beschädigung einer Unterkonstruktion und/oder einer Grundkonstruktion erfolgt.

Diese Aufgabe wird durch eine Haltevorrichtung nach der Lehre des Anspruchs 1 gelöst.

Vorteilhafte Ausgestaltungen sind Gegenstand der Unteransprüche.

Die erfindungsgemäße Haltevorrichtung zur Befestigung an einer Befestigungsunterkonstruktion und zur Befestigung von zumindest einem Flächenelement umfasst dabei zumindest ein Unterkonstruktionsbefestigungsmittel, mit dem eine Befestigung an einer Unterkonstruktion erfolgen kann. Weiter sieht die erfindungsgemäße Haltevorrichtung ein Flächenelementbefestigungsmittel vor, mit dem die Befestigung eines Flächenelements an der Haltevorrichtung erfolgen kann. Weiter sieht die erfindungsgemäße Haltevorrichtung zumindest ein Querkraftaufnahmemittel vor, welches das Unterkonstruktionsbefestigungsmittel und das Flächenelementbefestigungsmittel miteinander verbindet und mit dem Kräfte, welche parallel zu den großen Oberflächen des Flächenelements verlaufen, aufgenommen werden. Mit anderen Worten ausgedrückt ist es die Aufgabe des Querkraftaufnahmemittels, die Kräfte, welche im Wesentlichen parallel zu der durch die Flächenelemente gebildete Ebene verlaufen, von dem Flächenelementbefestigungsmittel auf das Unterkonstruktionsbefestigungsmittel zu übertragen, von wo aus sie auf die Befestigungsunterkonstruktion abgeleitet werden können.

Nach der erfindungsgemäßen Grundidee weist die beanspruchte Haltevorrichtung zudem ein Energieaufnahmemittel auf, welches zur Aufnahme von Energie eingerichtet ist, die durch Krafteinwirkung auf das zumindest eine Flächenelement senkrecht zur Ebene des Flächenelements in die Haltevorrichtung eingebracht wird. Dadurch wird ermöglicht, dass die im Wesentlichen senkrecht zur Ebene der Flächenelemente wirkenden Kräfte bzw. die mit diesen Kräften verbundene Energie selbst bei ansonsten nicht zur Energieaufnahme eingerichteten Unterkonstruktionen oder Grundkonstruktionen nicht zu einer Ermüdung oder Beschädigung der Flächenelemente, der Unterkonstruktion oder der Grundkonstruktion führt. Dies wiederum hat den Vorteil, dass die entsprechenden Flächenelemente geringeren Anforderungen genügen müssen und entsprechend schneller und günstiger produziert werden können oder dass alternativ hochbelastbare Flächenelemente noch größeren bzw. extremeren Krafteinwirkungen ohne Beschädigung oder Ermüdung widerstehen können. Damit wird also auch erreicht, dass die mit den erfindungsgemäßen Haltevorrichtungen befestigten Flächenelemente und mitunter die aus mehreren Flächenelementen gebildeten Flächen, wie beispielsweise Fassaden, eine insgesamt erhöhte Lebensdauer, ohne zeitintensive und kostspielige Wartungs- und Reparaturtätigkeiten aufweisen. Dies ist vor allem vor dem Hintergrund, dass entsprechende Haltevorrichtungen bei ihrem Einsatz im Fassadenbau teilweise in großer Höhe oder an anderen schwer zugänglichen Orten Verwendung finden, was Wartungen und Reparaturen weiter erschwert, besonders wünschenswert.

Weiter ist es wünschenswert, dass die Haltevorrichtung im Zustand normaler Krafteinwirkung, also ohne Beanspruchung des Energieaufnahmemittels, möglichst wenig Spiel zwischen den einzelnen Bestandteilen aufweist. Demnach ist es erfindungsgemäß vorgesehen, dass das Energieaufnahmemittel als Hohlzylinder ausgebildet ist und ein zylinderförmiges Querkraftaufnahmemittel umschließt, wobei der Außenradius des Querkraftaufnahmemittels geringfügig kleiner ist als der Innenradius des Energieaufnahmemittels. Folglich wird einerseits die Energieaufnahme des Energieaufnahmemittels nicht durch den Kontakt bzw. die Reibung am Querkraftaufnahmemittel eingeschränkt und andererseits eine kompakte, stabile und konstruktiv einfache Ausgestaltung der Haltevorrichtung ohne Spiel zwischen den Bestandteilen erreicht.

Besonders vorteilhaft ist es dabei, wenn die Flächenelementbefestigungsmittel Mittel zur Befestigung von Fassadenelementen, insbesondere Glas-, und/oder Glasverbundscheiben, aufweisen. Dies ist wünschenswert, da die erfindungsgemäße Haltevorrichtung insbesondere vorteilhaft im Fassadenbau eingesetzt werden kann, bei dem Flächenelemente bevorzugt aus solchen Werkstoffe bestehen. Alternativ oder additiv kann das Flächenelementbefestigungsmittel jedoch auch Mittel zur Befestigung von Flächenelementen aus Metall- und/oder Kunststoff- und/oder anderen Verbundmaterialien aufweisen, die einen flächigen, also im Wesentlichen platten oder scheibenartigen Charakter aufweisen.

Das Flächenelementbefestigungsmittel ist dabei derart eingerichtet, dass es eine sichere Befestigung von zumindest einem derartigen Flächenelement an der Haltevorrichtung bewerkstelligen kann. Bevorzugt kann die Befestigung beispielsweise durch Erzeugen einer Klemmwirkung auf ein Flächenelement bzw. auf Teile eines Flächenelements mittels zweier Klemmbacken erfolgen, wobei die Klemmwirkung beispielsweise durch eine Relativbewegung der Klemmbacken zueinander erzeugt werden kann. Dementsprechend weist das Flächenelementbefestigungsmittel nach einer Ausführungsform zwei Klemmbacken auf, die durch einen Klemmmechanismus oder eine Klemmeinrichtung relativ zueinander bewegt werden können. Grundsätzlich kann das Flächenelementbefestigungsmittel jedoch auch mittels einer Vielzahl anderer grundsätzlich bekannter Befestigungsmöglichkeiten und entsprechender Ausgestaltung die Befestigung des zumindest einen Flächenelements an der Haltevorrichtung bewerkstelligen.

Um die Befestigung der Flächenelemente noch sicherer zu gestalten, kann es vorteilhaft sein, wenn nicht eine glatte Oberfläche einer Klemmbacke mit einer glatten Oberfläche eines Flächenelements im Klemmzustand zur Anlage kommt. Dementsprechend ist es vorteilhaft, wenn die Klemmbacken Überstände oder Ausnehmungen aufweisen, die bei einer im Klemmzustand resultierenden Relativbewegung der Klemmbacken in Vertiefungen oder Ausnehmungen der Flächenelemente eingreifen oder Überstände der Flächenelemente umschließen. Mit anderen Worten ausgedrückt bedeutet dies, dass eine besonders sichere Befestigung der Flächenelemente erreicht wird, wenn die den Flächenelementen zugewandten Seiten der Klemmbacken eine Profilierung aufweisen, die im Wesentlichen dem Negativ der Profilierung der Flächenelemente im betreffenden Befestigungsbereich entsprechen.

Eine vorteilhafte Ausgestaltung des Unterkonstruktionsbefestigungsmittels ist jeweils stark von der einzelnen Ausführung der Unterkonstruktion abhängig. Allgemein ist es für den Fassadenbau jedoch vorteilhaft, wenn sich die Haltevorrichtung einerseits schnell und sicher an einer Fassadenunterkonstruktion befestigen lässt und andererseits ein einfaches Justieren und Einstellen der genauen Befestigungsposition bezüglich der Unterkonstruktion erlaubt. Dies kann vorteilhaft dadurch erreicht werden, dass das Unterkonstruktionsmittel zwei Klemmbeschläge aufweist, die durch einen Klemmmechanismus bzw. entsprechende Klemmmittel relativ zueinander bewegt werden können. Derart ausgestaltete Unterkonstruktionsbefestigungsmittel können eine sichere Befestigung und eine einfache, schnelle und genaue Montage der Haltevorrichtung an einer Vielzahl verschiedenster Fassadenunterkonstruktionen, wie zum Beispiel in Form eines Stangen-, Streben- und/oder Seilnetzes oder auch an Schienen, Trägern oder einfachen Unterkonstruktionspunkten, ermöglichen.

Gemäß einer weiteren Ausführungsform ist vorgesehen, dass das Querkraftaufnahmemittel als Führungsstab ausgebildet ist und kraftschlüssig mit dem Unterkonstruktionsbefestigungsmittel verbunden ist. Damit wird sichergestellt, dass die Querkräfte, also beispielsweise die Gewichtskräfte der Flächenelemente im Fassadenbau, problemlos auf die Unterkonstruktion bzw. Fassadenunterkonstruktion und womöglich anschließend auf eine Grundkonstruktion abgeleitet werden können. Gleichzeitig kann durch die Ausgestaltung als Führungsstab eine Führung der Flächenelemente bzw. der Flächenelementbefestigungsmittel erreicht werden, die nachfolgend genauer beschrieben wird.

Da die Energieaufnahme mittels des Energieaufnahmemittels gemäß der erfindungsgemäßen Haltevorrichtung mit einem Bewegungsprozess innerhalb der Haltevorrichtung einhergeht, ist es gemäß einer weiteren vorteilhaften Ausgestaltung vorgesehen, dass das Flächenelementbefestigungsmittel beweglich mit dem Querkraftaufnahmemittel bzw. dem Führungsstab verbunden ist, wobei die Verbindung derart ausgestaltet ist, dass eine Bewegung des Flächenelementbefestigungsmittels im Wesentlichen senkrecht zu den Ebenen der Flächenelemente erfolgen kann. Dadurch wird im Allgemeinen eine begrenzte Beweglichkeit der Flächenelemente ermöglicht. Dementsprechend können die Flächenelemente angreifenden Kräften nachgeben, wobei die zu der Bewegung nötige Energie mittels des Energieaufnahmemittels von der Haltevorrichtung aufgenommen werden kann. Mit anderen Worten ausgedrückt bedeutet dies, dass eine gezielte Bewegung der Flächenelementbefestigungsmittel relativ zu der restlichen Haltevorrichtung bzw. entlang des Querkraftaufnahmemittels oder des Führungsstabes ermöglicht wird, wobei das Energieaufnahmemittel so angeordnet ist, dass die dabei aufkommende Bewegungsenergie aufgenommen werden kann.

Alternativ zu den beiden vorangehend beschriebenen Ausführungsformen der beanspruchten Haltevorrichtung kann ebenfalls vorgesehen sein, dass eine feste, kraftschlüssige Verbindung zwischen Flächenelementbefestigungsmittel und Querkraftaufnahmemittel vorgesehen ist und das Querkraftaufnahmemittel derart mit dem Unterkonstruktionsbefestigungsmittel verbunden ist, dass eine entsprechende Relativbewegung von Querkraftaufnahmemittel und Unterkonstruktionsbefestigungsmittel ermöglicht wird. Die Wahl, ob und an welcher Stelle das Querkraftaufnahmemittel beweglich und ob und an welcher Stelle fest verbunden wird, kann jeweils in Abhängigkeit von den entsprechenden Faktoren, wie beispielsweise zu befestigenden Flächen- oder Fassadenelementen, der zu verwendenden Flächenelementbefestigungsmittel, der vorgegebenen Unterkonstruktion und Dergleichen, in jeweils vorteilhafter Art und Weise entschieden werden.

Gemäß einer weiteren besonders vorteilhaften Ausführungsform der Haltevorrichtung ist vorgesehen, dass das Energieaufnahmemittel zumindest einen Verformungskörper aufweist, der Energie durch elastische Verformung reversibel aufnehmen kann. Dadurch wird ermöglicht, dass das Energieaufnahmemittel und damit die gesamte Haltevorrichtung während hoher Krafteinwirkung bzw. unter Spitzenbelastungen Energie aufnehmen und somit die Beschädigung oder Ermüdung der Flächenelemente verhindern kann und diese aufgenommene bzw. gespeicherte Energie zu einem Zeitpunkt, an dem die hohe Belastung abgeklungen ist, wieder an die Umwelt abgeben kann.

Es besteht jedoch auch die Gefahr, dass die auf die Flächenelemente wirkenden Kräfte senkrecht zu den Ebenen der Flächenelemente so groß werden, dass eine reversible Aufnahme der damit verbundenen Energie im Rahmen des Möglichen nicht sinnvoll erscheint, ohne dass Beschädigungen an den Flächenelementen zu vermuten sind. Mit anderen Worten ausgedrückt bedeutet dies, dass es bei hohen, insbesondere kurzzeitigen, Krafteinwirkungen auf die Flächenelemente besonders wünschenswert ist, die damit verbundene Energie möglichst kurzfristig und permanent aus der entsprechenden Haltevorrichtung abzuleiten. Dementsprechend sieht eine vorteilhafte Ausgestaltung vor, dass das Energieaufnahmemittel zumindest einen Verformungskörper aufweist, der Energie durch plastische Verformung irreversibel aufnehmen kann. Dadurch wird erreicht, dass die Energie, welche die Bewegung der Flächenelemente bezüglich der Haltevorrichtung verursacht, zur Verformung der Verformungskörper des Energieaufnahmemittels genutzt wird, wodurch die entsprechenden Kräfte von den Flächenelementen auf die Haltevorrichtung übertragen werden können und die damit verbundene Energie durch die Verformung des Verformungskörpers des Energieaufnahmemittels aus der Haltevorrichtung abgeleitet werden kann.

Die beiden vorangehend beschriebenen Ausführungsformen der erfindungsgemäßen Haltevorrichtung können auch beliebig miteinander kombiniert werden. Mit anderen Worten ausgedrückt bedeutet dies, dass sowohl ein einziger Verformungskörper vorgesehen sein kann, der sowohl eine elastische als auch eine plastische Verformung ermöglicht, als auch dass mehrere einzelne Verformungskörper vom Energieaufnahmemittel umfasst werden, wobei die jeweiligen Verformungskörper für eine gezielte elastische Verformung, eine gezielte plastische Verformung oder eine kombinierte elastische sowie plastische Verformung vorgesehen sein können. Durch die entsprechende Wahl des bzw. der Verformungskörper kann ein Energieaufnahmemittel bereit gestellt werden, welches den jeweilig besten Schutz der Flächenelemente für die zu erwartenden bzw. zu befürchtenden Krafteinwirkungen ermöglicht. Zudem kann durch eine geeignete Wahl des bzw. der Verformungskörper das Entstehen ungewollter oder schädlicher Resonanzeffekte verhindert werden.

Nach einer vorteilhaften Ausführungsform ist zudem vorgesehen, dass der Verformungskörper als Feder, insbesondere als Tellerfeder, ausgeführt ist. Derartige Federn können besonders gut nach den jeweiligen Vorgaben elastische und/oder plastische Verformungscharakteristika aufweisen.

Gemäß einer alternativen Ausgestaltung kann vorgesehen sein, dass der Verformungskörper als Metallhohlkörper ausgeführt ist, der mit einer Metallschaumfüllung gefüllt ist. Vorgenannte Verformungskörper weisen besonders im Bereich der Energieaufnahme durch plastische Verformung besonders gute und wünschenswerte Charakteristika für die erfindungsgemäßen Energieaufnahmemittel bzw. für die erfindungsgemäße Haltevorrichtung auf. Der Metallschaum im Inneren eines hohlen Metallverformungskörpers kann beispielsweise aus Aluminiumschaum gebildet werden. Alternativ sind jedoch auch verschiedenste andere metallische sowie auch nichtmetallische Füllungen bzw. Füllungsstrukturen eines hohlen Verformungskörpers denkbar und können je nach Anforderungen vorteilhaft sein.

Um Druckkräfte, also Kräfte, die in Richtung der Unterkonstruktion auf die Ebene des Flächenelementes einwirken, mit der erfindungsgemäßen Haltevorrichtung möglichst gut aufnehmen zu können, ist gemäß einer vorteilhaften Weiterbildung vorgesehen, zumindest ein Energieaufnahmemittel auf der dem Unterkonstruktionsbefestigungsmittel zugewandten Seite des Flächenelementbefestigungsmittels an das Flächenelementbefestigungsmittel anzuschließen, wobei das Energieaufnahmemittel das Querkraftaufnahmemittel entlang des Querkraftaufnahmemittels im Anschluss an das Flächenbefestigungsmittel vollständig umschließt. Somit kann bei Einwirkung von Druckkräften auf die Flächenelemente das Flächenelementbefestigungsmittel relativ zum Unterkonstruktionsbefestigungsmittel bewegt und die dazu nötige Energie bzw. die dabei entstehende Energie mittels des Energieaufnahmemittels aufgenommen werden.

Um unkontrollierte Bewegungen der Flächenelemente bzw. der Flächenelementbefestigungsmittel zu vermeiden, kann zudem vorgesehen sein, dass das Energieaufnahmemittel bündig mit dem Unterkonstruktionsbefestigungsmittel und dem Flächenelementbefestigungsmittel abschließt.

Sowohl durch Luftbewegungen bzw. Luftströmungen als auch durch Reaktionen auf Druckkräfte, wie beispielsweise Rückschläge, kann es dazu kommen, dass enorme Zugkräfte, also Kräfte, die senkrecht auf den Ebenen der Flächenelemente von der Unterkonstruktion weg weisen, auf die Flächenelemente einwirken. Um auch bei derartigen Krafteinwirkungen eine zeitweise oder permanente Energieaufnahme durch die Haltevorrichtung bzw. entsprechende Energieaufnahmemittel der Haltevorrichtung zu gewährleisten, ist gemäß einer weiteren besonders vorteilhaften Ausgestaltung der erfindungsgemäßen Haltevorrichtung vorgesehen, dass zumindest ein Energieaufnahmemittel auf der dem Unterkonstruktionsbefestigungsmittel abgewandten Seite des Flächenelementbefestigungsmittels an das Flächenelementbefestigungsmittel anschließt, wobei das Energieaufnahmemittel das Querkraftaufnahmemittel entlang des Querkraftaufnahmemittels im Anschluss an das Flächenbefestigungsmittel vollständig umschließt. Zu der Befestigung des Energieaufnahmemittels können beispielsweise an dem dem Unterkonstruktionsbefestigungsmittel abgewandten Ende des Querkraftaufnahmemittels entsprechende Vorrichtungen, wie beispielsweise Anschläge oder Aufnahmen, vorgesehen sein.

Mit anderen Worten ausgedrückt bedeutet dies, dass das Querkraftaufnahmemittel bei einer beweglichen Lagerung des Flächenelementbefestigungsmittels auf der dem Unterkonstruktionsbefestigungsmittel abgewandten Seite über das Flächenelementbefestigungsmittel hinaus verläuft und auf der dem Unterkonstruktionsbefestigungsmittel abgewandten Seite des Flächenelementbefestigungsmittels ein Energieaufnahmemittel angeordnet ist. In Analogie zu der bereits beschriebenen Alternative einer relativen Bewegung des Unterkonstruktionsbefestigungsmittels gegenüber dem Querkraftaufnahmemittel kann zur Energieaufnahme von durch Zugkraft verursachter Energie ebenfalls ein Energieaufnahmemittel auf der dem Flächenelementbefestigungsmittel abgewandten Seite des Unterkonstruktionsbefestigungsmittels vorgesehen sein, wobei dann ebenfalls eine entsprechende Verlängerung des Querkraftaufnahmemittels über das Unterkonstruktionsbefestigungsmittel hinaus vorzusehen ist.

Zur Aufnahme der vorangehend beschriebenen Zugkräfte bzw. der entsprechenden Energien ist ebenfalls besonders vorteilhaft vorsehbar, dass das Energieaufnahmemittel bündig mit dem Flächenelementbefestigungsmittel und dem dem Unterkonstruktionsbefestigungsmittel abgewandten Ende des Querkraftaufnahmemittels abschließt. Ein entsprechender bündiger Abschluss kann auch für die vorangehend dargestellte Alternative eines bezüglich des Querkraftaufnahmemittels beweglichen Unterkonstruktionsbefestigungsmittels vorgesehen sein. Der bündige Abschluss verhindert auch hier ungewollte Bewegungen der Flächenelemente bzw. der Flächenelementbefestigungsmittel und ermöglicht eine kompakte, verschleißarme Ausgestaltung der Haltevorrichtung.

Um die Anzahl von benötigten Haltevorrichtungen zu reduzieren, ohne die Funktionalität zu mindern, sieht eine weitere vorteilhafte Ausgestaltung vor, dass eine Mehrzahl von Flächenelementbefestigungsmitteln mit einem Flächenelementbefestigungsverteilerelement verbunden ist, wobei das Flächenelementbefestigungsverteilerelement beweglich mit dem Querkraftaufnahmemittel verbunden ist. Bei einer Verwendung von einem Querkraftaufnahmeelement für eine Mehrzahl von Flächenelementbefestigungsmitteln und einem entsprechenden Verteilerelement kann vorgesehen sein, dass in Bezug auf das oder die Energieaufnahmeelemente das Verteilerelement an die Stelle des Flächenelementbefestigungstmittel tritt. Mit anderen Worten ausgedrückt sollen die vorangehend besonders vorteilhaft dargestellten Ausgestaltungen bezüglich der Anordnung von Energieaufnahmemitteln auch auf ein oben dargestelltes, beweglich mit einem Querkraftaufnahmemittel verbundenes Verteilerelement anwendbar sein.

Alternativ kann ebenfalls vorgesehen sein, dass jedes Flächenelementbefestigungsmittel mit jeweils einem Querkraftaufnahmemittel verbunden ist. Dies hat jedoch nicht zur Folge, dass eine erfindungsgemäße Haltevorrichtung über lediglich ein Flächenelementbefestigungsmittel verfügen kann. Vielmehr ist es möglich, mit einem alternativen, dem Unterkonstruktionsbefestigungsmittel zugeordneten Verteilerelement eine Mehrzahl von Flächenelementbefestigungsmitteln und eine gleiche Anzahl von Querkraftaufnahmemitteln für eine einzelne Haltevorrichtung vorzusehen.

Weiter kann es wünschenswert sein, wenn Informationen oder allgemein elektrische (Daten-) Ströme von der Unterkonstruktion bzw. von der Grundkonstruktion nach außen, also an das dem Unterkonstruktionsmittel abgewandte Ende des Querkraftaufnahmemittels oder umgekehrt, geleitet werden können. Dementsprechend kann gemäß einer vorteilhaften Ausgestaltung der Haltevorrichtung vorgesehen sein, dass zwischen dem Unterkonstruktionsbefestigungsmittel und einer dem Unterkonstruktionsbefestigungsmittel abgewandten Seite des Querkraftaufnahmemittels ein durchgängiger Kanal verläuft, welcher zur Aufnahme einer elektrischen Leitung eingerichtet ist.

Sowohl aus gestalterischen als auch aus technischen Gründen kann es besonders wünschenswert sein, von den erfindungsgemäßen Haltevorrichtungen optische Signale an die der Unterkonstruktion bzw. Grundkonstruktion abgewandte Umwelt auszusenden. Dementsprechend sieht eine besonders vorteilhafte Variante der erfindungsgemäßen Haltevorrichtung vor, dass auf der dem Unterkonstruktionsbefestigungsmittel abgewandten Seite des Querkraftaufnahmemittels ein Leuchtmittel, insbesondere eine Leuchtdiode, angeordnet ist. Dabei ist es besonders vorteilhaft, wenn die Ansteuerung sowie Versorgung des Leuchtmittels ebenfalls über die Haltevorrichtung erfolgt.

Im Folgenden wird die erfindungsgemäße Haltevorrichtung anhand lediglich Ausführungsbeispiele zeigender Zeichnungen näher erläutert.

Es zeigt:
- Fig. 1: eine erfindungsgemäße Haltevorrichtung gemäß einer ersten Ausführungsform;
- Fig. 2: eine perspektivische Darstellung einer erfindungsgemäßen Haltevorrichtung gemäß der ersten Ausführungsform vor einer dissipativen Energieaufnahme;
- Fig. 3: eine perspektivische Darstellung einer erfindungsgemäßen Haltevorrichtung gemäß der ersten Ausführungsform nach einer dissipativen Energieaufnahme;
- Fig. 4: eine Explosionszeichnung der Haltevorrichtung gemäß einer ersten Ausführungsform;
- Fig. 5: eine Explosionszeichnung einer erfindungsgemäßen Haltevorrichtung gemäß einer zweiten Ausführungsform;
- Fig. 6: eine erfindungsgemäße Haltevorrichtung gemäß einer dritten Ausführungsform;
- Fig. 7: eine erfindungsgemäße Haltevorrichtung gemäß einer vierten Ausführungsform;
- Fig. 8: eine Explosionszeichnung der Haltevorrichtung gemäß der vierten Ausführungsform;
- Fig. 9: eine erfindungsgemäße Haltevorrichtung gemäß einer fünften Ausführungsform;
- Fig. 10: eine Explosionszeichnung einer Haltevorrichtung gemäß der fünften Ausführungsform;
- Fig. 11: eine Haltevorrichtung gemäß einer sechsten Ausführungsform;
- Fig. 12: eine Explosionszeichnung einer Haltevorrichtung gemäß der sechsten Ausführungsform;
- Fig. 13: eine Haltevorrichtung gemäß einer siebten Ausführungsform;
- Fig. 14: eine Explosionszeichnung einer Haltevorrichtung gemäß der siebten Ausführungsform.

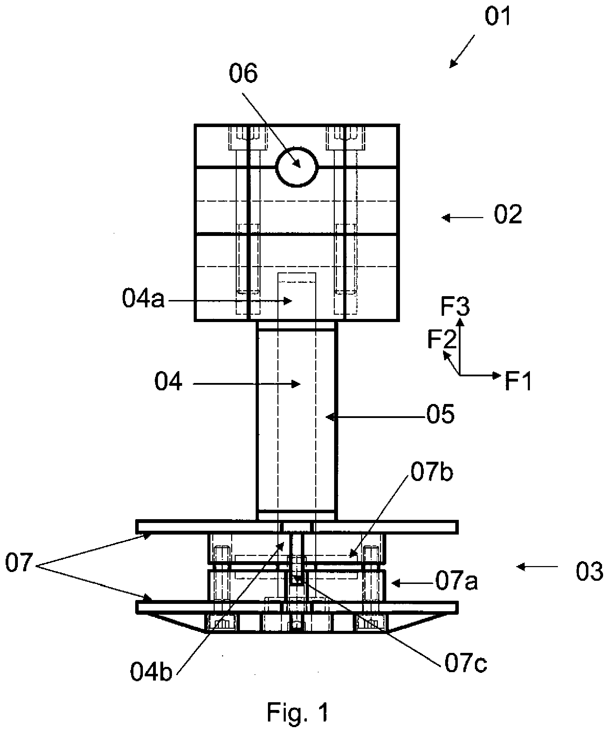

In Fig. 1 ist ein erstes Ausführungsbeispiel einer erfindungsgemäßen Haltevorrichtung 01 dargestellt. Die Haltevorrichtung 01 weist ein Unterkonstruktionsbefestigungsmittel 02, ein Flächenelementbefestigungsmittel 03, ein Querkraftaufnahmemittel 04 sowie ein Energieaufnahmemittel 05 auf.

Gemäß dieser ersten Ausführungsform ist das Unterkonstruktionsbefestigungsmittel 02 zur Befestigung an einer Stangen- oder Seilnetzunterkonstruktion eingerichtet, was durch die Unterkonstruktionsaufnahmeöffnung 06 angedeutet wird. Weiter weist das Flächenelementbefestigungsmittel 03 zwei Befestigungsbacken 07 auf, mit denen durch eine Relativbewegung zueinander eine Klemmwirkung auf ein Flächenelement ausgeübt werden kann. Ebenfalls erkennbar sind Überstände 07a und Ausnehmungen 07b der Klemmbacken sowie eine Führungseinrichtung 07c der Klemmbacken 07. Die Überstände 07a und Ausnehmungen 07b bzw. die Profilierung dient dabei zur sicheren Befestigung der Flächen- bzw. Fassadenelemente. Die Führungseinrichtung 07c dient zur Führung der Klemmbacken 07 bei einer Relativbewegung.

Weiter geht aus der Fig. 1 hervor, dass das Querkraftaufnahmemittel 04 sowohl mit dem Unterkonstruktionsbefestigungsmittel 02 im Bereich 04a als auch mit dem Flächenelementbefestigungsmittel 03 im Bereich 04b verbunden ist. Zudem ist in Fig. 1 erkenntlich, dass das Energieaufnahmemittel 05 bündig zwischen dem Unterkonstruktionsbefestigungsmittel 02 und dem Flächenelementbefestigungsmittel 03 angeordnet ist, wobei das Energieaufnahmemittel 05 in der Ausführungsform der Fig. 1 einen Hohlzylinder darstellt, der das ebenfalls zylinderförmige Querkraftaufnahmemittel 04 vollständig umschließt.

Mit der Haltevorrichtung 01 gemäß der Fig. 1 wird somit sichergestellt, dass erstens Querkräfte F1 und F2, die auf das Flächenelementbefestigungsmittel 03 wirken, über das Querkraftaufnahmemittel 04 sowie das Unterkonstruktionsbefestigungsmittel 02 in die Unterkonstruktion abgeleitet werden können, und zweitens durch eine Bewegung des Flächenbefestigungselements 03 relativ zu dem Querkraftaufnahmemittel 04 in Richtung des Unterkonstruktionsbefestigungsmittels 02 durch Kräfte F3 Energie in das Energieaufnahmemittel 05 reversibel oder irreversibel aufgenommen werden kann.

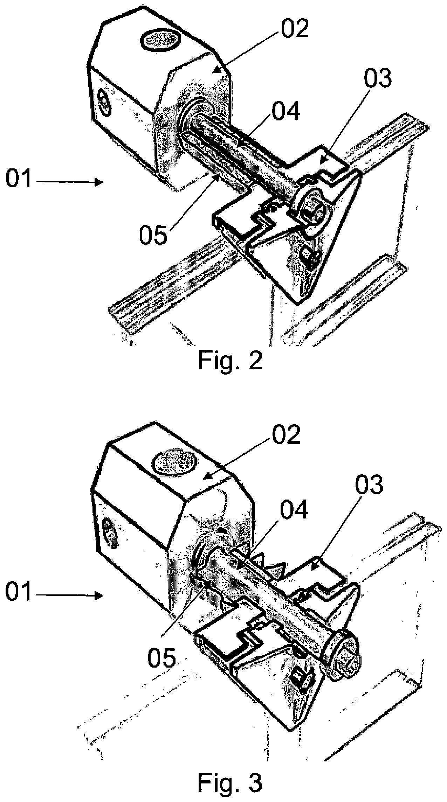

In Fig. 2 und 3 ist die Funktionsweise der erfindungsgemäßen Haltevorrichtung schematisch dargestellt. Die Haltevorrichtung 01 entspricht der ersten Ausführungsform und weist neben dem Unterkonstruktionsbefestigungsmittel 02 ein Querkraftaufnahmemittel 04, ein Flächenelementbefestigungsmittel 03 sowie ein Energieaufnahmemittel 05 auf. Nun soll angenommen werden, dass die beiden Figuren 2 und 3 die Haltevorrichtung vor bzw. nach einem Zeitpunkt darstellen, an dem eine enorme Kraft auf die Flächenelemente in Richtung des Unterkonstruktionsbefestigungsmittel gewirkt hat. Wie aus Fig. 3 erkenntlich, ragt das Querkraftaufnahmemittel 04, im Gegensatz zu Fig. 2, auf der dem Unterkonstruktionsbefestigungsmittel 02 abgewandten Seite des Flächeelententbefestigungsmittel 03 über das Flächenelementbefestigungsmittel 03 hinaus. Mit anderen Worten ausgedrückt bedeutet dies, dass das Flächenelementbefestigungsmittel 03 entlang des Querkraftaufnahmemittels 04 auf das Unterkonstruktionsbefestigungsmittel 02 zu bewegt wurde. Um die dabei entstehende Energie aus der Haltevorrichtung abzuleiten, ist eine plastische Verformung des Energieaufnahmemittels 05 eingetreten, was in Fig. 3 durch die verkürzte Länge zwischen Unterkonstruktionsbefestigungsmittel 02 und Flächenelementbefestigungsmittel 03 sowie durch die wellenförmig verformte Oberfläche des Energieaufnahmemittels 05 dargestellt ist.

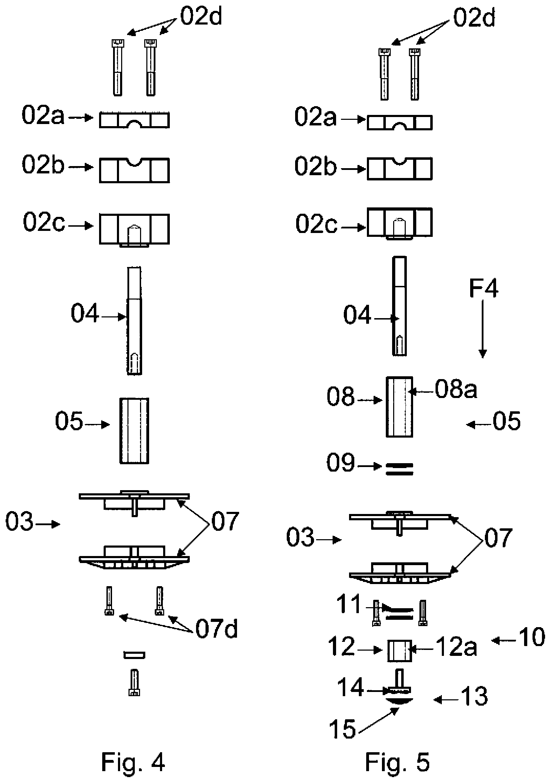

Fig. 4 zeigt in der Explosionszeichnung der ersten Ausführungsform nochmals die einzelnen Bestandteile der erfindungsgemäßen Haltevorrichtung 01 gemäß Fig. 1. Darin ist zu erkennen, dass das Unterkonstruktionsbefestigungsmittel 02 zwei Klemmbeschlägen 02a und 02b sowie einen dritten Bestandteil 02c sowie die Klemmmittel 02d aufweist. Mittels der Klemmbeschläge 02a und 02b wird die Befestigung an der Unterkonstruktion mittels einer Klemmwirkung unter Verwendung der Klemmmittel 02d und mit dem Bestandteil 02c die Befestigung mit dem Querkraftaufnahmemittel gemäß einer entsprechenden kraftschlüssigen Verbindung hergestellt.

Ebenfalls aus der Explosionszeichnung der Fig. 4 erkenntlich sind die Klemmmeinrichtungen 07d inklusive einer Führungseinrichtung 07c der Klemmbacken 07 des Flächenelementbefestigungsmittels 03. Wie bereits erwähnt, kann über die Betätigung der Klemmeinrichtungen 07d eine Relativbewegung der Klemmbacken 07 erreicht werden, die durch die Führungseinrichtung 07c geführt wird. Ebenfalls erkennbar ist, dass das zylinderförmige Energieaufnahmemittel 05 eine entlang der Längsachse verlaufende Ausnehmung aufweist, so dass das Energieaufnahmemittel 05 konzentrisch um das ebenfalls zylinderförmige Querkraftaufnahmemittel 04 verlaufen kann.

Fig. 5 zeigt eine Explosionszeichnung einer erfindungsgemäßen Haltevorrichtung 01 gemäß einer zweiten Ausführungsform. Dabei unterscheidet sich die zweite Ausführungsform von der ersten Ausführungsform der Fig. 1 bis 4 zunächst darin, dass das erste Energieaufnahmemittel 05 aus zwei Verformungskörpern 08 und 09 besteht, wobei es sich bei dem Verformungskörper 08 um einen Verformungskörper zur plastischen Verformung, beispielsweise um einen Metallhohlkörper mit Metallschaumfüllung 08a, und bei dem Verformungskörper 09 um einen Verformungskörper zur elastischen Verformung handelt. Der Verformungskörper 09 ist beispielsweise als Tellerfeder ausgeführt. Weiter sieht die zweite Ausführungsform zusätzlich zur ersten Ausführungsform der Fig. 1 bis 4 ein zweites Energieaufnahmeelement 10 vor, welches sich auf der dem Unterkonstruktionsbefestigungsmittel abgewandten Seite des Flächenelementbefestigungsmittels befindet bzw. an letzteres anschließt und somit zur Aufnahme von Energie eingerichtet ist, welche durch Zugkräfte, also Kräfte F4, welche vom Unterkonstruktionsbefestigungsmittel 02 in Richtung des Flächenelementbefestigungsmittels 03 weisen, eingerichtet ist. Auch das Energieaufnahmemittel 10 besteht wiederum aus einem plastischen Verformungskörper 12 sowie einem elastischen Verformungskörper 11. Ebenfalls zusätzlich zu der ersten Ausführungsform ist die Haltevorrichtung 01 gemäß der zweiten Ausführungsform in Fig. 5 mit einem Leuchtmittel 13 ausgestattet, welches sich an dem dem Unterkonstruktionsbefestigungsmittel abgewandten Ende 04c des Querkraftaufnahmemittels 04 befindet. Die Leuchtvorrichtung 13 umfasst dabei eine Mehrzahl von Leuchtmitteln 14, beispielsweise Leuchtdioden, sowie ein Optikelement 15, wie beispielsweise eine Linse.

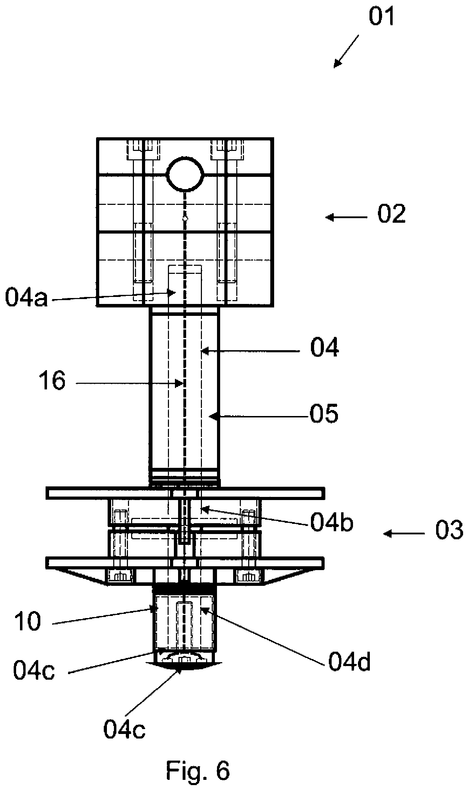

Die Fig. 6 zeigt eine dritte Ausführungsform der erfindungsgemäßen Haltevorrichtung 01, wobei die Haltevorrichtung 01 zusätzlich zu der zweiten Ausführungsform der Fig. 5 einen, strichliniert dargestellten, Kanal 16 umfasst, welcher vom Unterkonstruktionsbefestigungsmittel 02 bis zu einem dem Unterkonstruktionsbefestigungsmittel abgewandten Ende 04c des Querkraftaufnahmemittels 04 verläuft. Damit kann beispielsweise die elektrische Ansteuerung und Energieversorgung der Leuchtvorrichtung 13 erfolgen.

In der Darstellung der Fig. 6, insbesondere im Vergleich mit der Fig. 5, gut erkennbar ist, dass das Querkraftaufnahmemittel 04 von dem Unterkonstruktionsbefestigungsmittel 02 über das Flächenelementbefestigungsmittel 03 verläuft und sogar auf der dem Unterkonstruktionsbefestigungsmittel abgewandten Seite des Flächenelementbefestigungsmittels im Bereich 04d verläuft. Dadurch wird deutlich, dass das Flächenelementbefestigungsmittel 03 grundsätzlich beweglich auf dem Querkraftaufnahmemittel 04 gelagert ist und die Bewegung lediglich durch die Energieaufnahmemittel 05 und 10, welche jeweils bündig anliegen, eingeschränkt wird.

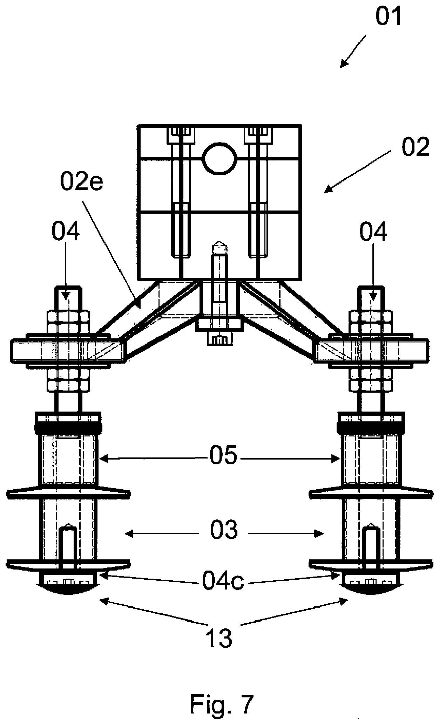

Fig. 7 zeigt eine erfindungsgemäße Haltevorrichtung 01 gemäß einer vierten Ausführungsform. Dabei umfasst die Haltevorrichtung 01 zwei Querkraftaufnahmemittel 04, welche wiederum jeweils mit einem Flächenelementbefestigungsmittel 03 verbunden sind und jeweils von einem Energieaufnahmemittel 05 zumindest teilweise umschlossen werden. Die Befestigung von zwei Querkraftaufnahmemitteln 04 an dem Unterkonstruktionsbefestigungsmittel 02 erfolgt über ein dem Unterkonstruktionsbefestigungsmittel zuordenbares Verteilerelement 02e. Ebenfalls aus der Fig. 7 geht hervor, dass an jedem der beiden Querkraftaufnahmemittel 04 eine Leuchtvorrichtung 13 an deren einen Ende angeordnet ist. Es ist zusätzlich ebenfalls möglich, dass es sich bei dem Verteilerelement 02e um ein drei-, vier oder mehrarmiges Verteilerelement handelt, mit dem entsprechend viele Querkraftaufnahmeelemente 04 und dementsprechend viele Flächenelementsbefestigungsmittel und Energieaufnahmemittel verbunden werden können.

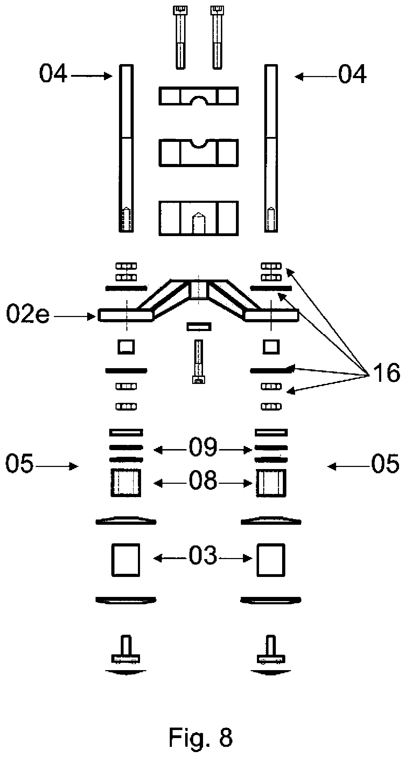

Fig. 8 zeigt eine Explosionszeichnung der Haltevorrichtung 01 gemäß der vierten Ausführungsform der Fig. 7. Darin gut zu erkennen sind die Befestigungsmittel 16, mit denen die Befestigung der beiden Querkraftaufnahmemittel 04 an dem Verteilerelement 02e des Unterkonstruktionsbefestigungsmittels 02 erfolgt. Ebenfalls dargestellt sind die jeweils zwei Verformungskörper 08 und 09 der Energieaufnahmeelemente 05.

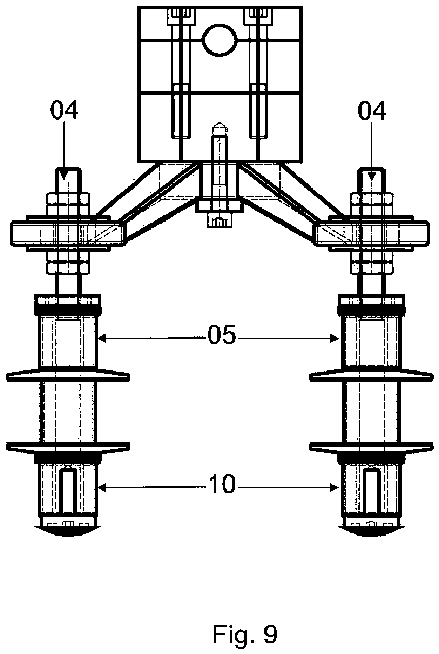

Fig. 9 zeigt eine fünfte Ausführungsform der erfindungsgemäßen Haltevorrichtung 01, wobei in Weiterbildung zu der vierten Ausführungsform der Fig. 7 und 8 nunmehr jedes der Querkraftaufnahmemittel 04 von jeweils zwei Energieaufnahmemitteln 05 und 10 umschlossen wird, wobei jeweils ein Energieaufnahmemittel an jeweils einer Seite an das Befestigungsaufnahmemittel anschließt. Damit kann die Haltevorrichtung 01 sowohl Energie aufgrund von Zugkräften in Richtung F4 als auch Energie aufgrund von Druckkräften in Richtung F3 reversibel oder irreversibel aufnehmen, wobei die Aufnahme durch Bewegung entlang jeweils einem Flächenelementsbefestigungsmittel zugeordnetem Querkraftaufnahmemittel 04 erfolgt.

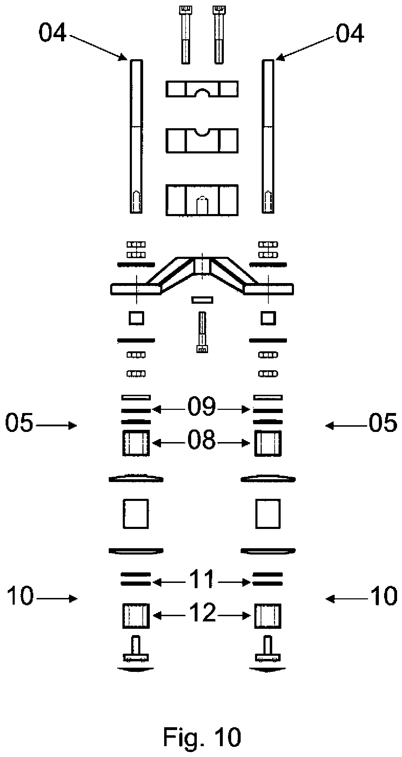

Die Fig. 10, die eine Explosionszeichnung der Haltevorrichtung 01 gemäß der fünften Ausführungsform der Fig. 9 darstellt, zeigt zudem deutlich, dass die jeweils zwei Energieaufnahmemittel 05 und 10 der beiden Querkraftaufnahmemittel 04 aus jeweils zwei Verformungskörpern 08 und 09 sowie 11 und 12 bestehen. Auch bei dieser Ausführungsform kann es sich um ein mehrarmiges Verteilerelement 02e und eine entsprechende Mehrzahl von Querkraftaufnahmemitteln 04 handeln.

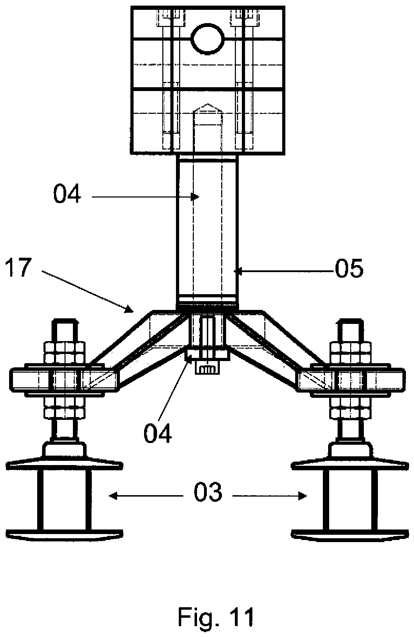

Fig. 11 zeigt eine erfindungsgemäße Haltevorrichtung 01 gemäß einer sechsten Ausführungsform, wobei die Haltevorrichtung 01 nur ein Querkraftaufnahmemittel 04 und eine Mehrzahl von Flächenelementbefestigungsmitteln 03 umfasst. Dies wird dadurch erreicht, dass die Flächenelementbefestigungsmittel 03 lediglich indirekt über ein Flächenelementbefestigungsverteilerelement 17 mit dem Querkraftaufnahmemittel 04 verbunden sind. Gemäß der sechsten Ausführungsform der Fig. 11 ist dabei das Verteilerelement 17 beweglich auf bzw. an dem Querkraftaufnahmemittel 04 gelagert, so dass Energie, welche durch Druckkräfte in die Haltevorrichtung eingebracht wird, über das Energieaufnahmemittel 05 aufgenommen bzw. abgeführt werden kann. Demnach ist also die Energieaufnahme auf Grund von Druckkrafteinwirkung von insgesamt einer Mehrzahl von Flächenelementbefestigungsmitteln 03 über lediglich ein Querkraftaufnahmemittel 04 und ein Energieaufnahmemittel 05 möglich.

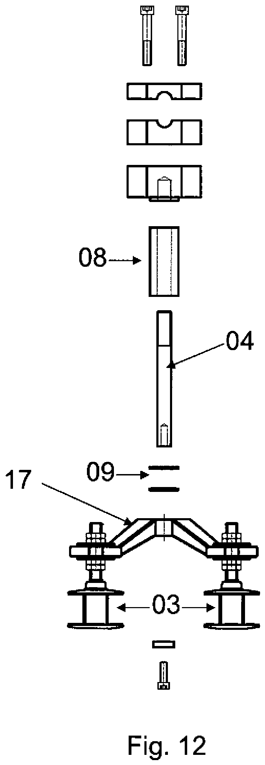

Fig. 12 zeigt eine Explosionszeichnung einer erfindungsgemäßen Haltevorrichtung 01 gemäß der sechsten Ausführungsform, aus der nochmals ersichtlich wird, dass zwei Flächenelementbefestigungsmittel 03 mit einem gemeinsamen Flächenelementbefestigungsverteilerelement 17 verbunden sind und wobei das Flächenelementbefestigungsverteilerelement 17 beweglich auf dem Querkraftaufnahmeelement 04 befestigt bzw. gelagert ist.

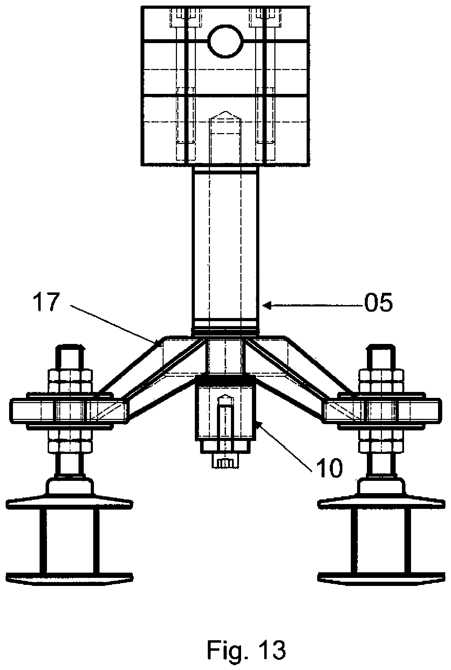

Fig. 13 zeigt eine siebte Ausführungsform einer erfindungsgemäßen Haltevorrichtung 01, wobei es sich um eine Weiterentwicklung der sechsten Ausführungsform handelt. Die in Fig. 12 dargestellte Ausführungsform unterscheidet sich dadurch von der vorangehend beschriebenen Ausführungsform, dass erneut zwei Energieaufnahmemittel 05 und 10 von der Haltevorrichtung umfasst sind, wobei diese Energieaufnahmemittel auf beiden Seiten des Flächenelementbefestigungsverteilerelements 17 zur Anlage kommen, und somit sowohl zur Aufnahme von Energie aufgrund von Druckkräften als auch zur Aufnahme von Energie aufgrund von Zugkräften eingerichtet sind.

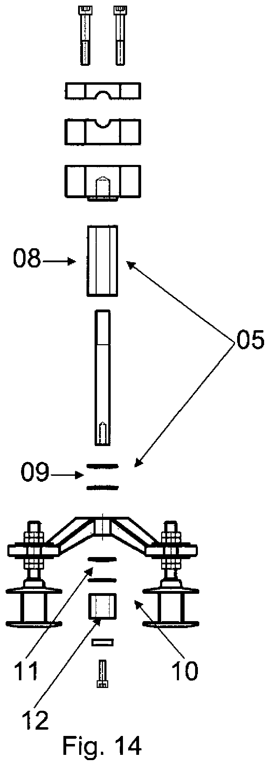

Fig. 14 zeigt eine Explosionszeichnung der erfindungsgemäßen Haltevorrichtung 01 gemäß der siebten Ausführungsform, wobei der Fig. 12 ebenfalls zu entnehmen ist, dass die beiden Energieaufnahmemittel 05 und 10 jeweils zwei Verformungskörper 08 und 09 sowie 11 und 12 umfassen.

## Patentansprüche

1. Haltevorrichtung zur Befestigung von zumindest einem Flächenelement umfassend:
- zumindest ein Unterkonstruktionsbefestigungsmittel (02);
- zumindest ein Flächenelementbefestigungsmittel (03); und
- zumindest ein Querkraftaufnahmemittel (04), welches Unterkonstruktionsbefestigungsmittel (02) und Flächenelementbefestigungsmittel (03) miteinander verbindet und mit dem Kräfte, die in der durch die Flächenelemente gebildeten Ebene wirken, aufgenommen werden;
zumindest ein Energieaufnahmemittel (05), welches Energie aufnimmt, die durch Kräfte senkrecht zu der durch die Flächenelemente gebildeten Ebene in die Haltevorrichtung (01) eingebracht wird;
**dadurch gekennzeichnet,**
**dass** das Energieaufnahmemittel (05) als Hohlzylinder ausgebildet ist und ein zylinderförmiges Querkraftaufnahmemittel (04) umschließt, wobei der Außenradius des Querkraftaufnahmemittels (04) geringfügig kleiner ist als der Innenradius des Energieaufnahmemittels (05).

2. Haltevorrichtung nach Anspruch 1,
**dadurch gekennzeichnet,**
**dass** das Flächenelementbefestigungsmittel (03) Mittel zur Befestigung von Fassadenelementen, insbesondere von Glasverbund- und/oder Glasscheiben, aufweist.

3. Haltevorrichtung nach Anspruch 1,
**dadurch gekennzeichnet,**
**dass** das Flächenelementbefestigungsmittel (03) Klemmbacken (07) umfasst, die durch eine Klemmmeinrichtung (07d) relativ zueinander bewegt werden können, wodurch eine Klemmwirkung auf ein Flächenelement entsteht.

4. Haltevorrichtung nach Anspruch 1,
**dadurch gekennzeichnet,**
**dass** die Klemmbacken (07) Überstände (07a) oder Ausnehmungen (07b) aufweisen , die bei einer Relativbewegung der Klemmbacken (07) zueinander in Vertiefungen oder Ausnehmungen der Flächenelemente eingreifen oder Überstände der Flächenelemente umschließen können.

5. Haltevorrichtung nach Anspruch 1,
**dadurch gekennzeichnet,**
**dass** das Unterkonstruktionsbefestigungsmittel (02) Klemmbeschläge (02a, 02b) zur Befestigung an einer Fassadenunterkonstruktion, insbesondere an einer Seilnetzfassadenunterkonstruktion, aufweist, wobei die Klemmbeschläge durch ein Klemmmittel (02d) relativ zueinander bewegt werden können.

6. Haltevorrichtung nach Anspruch 1,
**dadurch gekennzeichnet,**
**dass** das Querkraftaufnahmemittel (04) als Führungsstab ausgebildet ist und kraftschlüssig mit dem Unterkonstruktionsbefestigungsmittel (02) verbunden ist.

7. Haltevorrichtung nach Anspruch 1,
**dadurch gekennzeichnet,**
**dass** das Flächenelementbefestigungsmittel (03) beweglich mit dem Querkraftaufnahmemittel (04) verbunden ist, wobei die Verbindung derart ausgestaltet ist, dass eine Bewegung des Flächenelementbefestigungsmittels (03) quer zu der durch die Flächenelemente gebildeten Ebene erfolgen kann.

8. Haltevorrichtung nach Anspruch 1,
**dadurch gekennzeichnet,**
**dass** das Energieaufnahmemittel (05) zumindest einen Verformungskörper (08, 09,11, 12) aufweist, der Energie durch elastische und/oder plastische Verformung reversibel und/oder irreversibel aufnehmen kann.

9. Haltevorrichtung nach Anspruch 1,
**dadurch gekennzeichnet,**
**dass** der Verformungskörper (09, 11) als Feder, insbesondere als Tellerfeder, oder als Metallhohlkörper, der mit einer Metallschaumfüllung (08a, 12a) gefüllt ist ausgeführt ist.

10. Haltevorrichtung nach Anspruch 1,
**dadurch gekennzeichnet,**
**dass** zumindest ein Energieaufnahmemittel (05) auf der dem Unterkonstruktionsbefestigungsmittel (02) zugewandten Seite des Flächenelementbefestigungsmittels (03) an das Flächenelementbefestigungsmittel (03) anschließt, wobei das Energieaufnahmemittel (05) das Querkraftaufnahmemittel (04) im Anschluss an das Flächenelementbefestigungsmittel (03) vollständig umschließt.

11. Haltevorrichtung nach Anspruch 1,
**dadurch gekennzeichnet,**
**dass** das zumindest eine Energieaufnahmemittel bündig mit dem Unterkonstruktionsbefestigungsmittel (02) abschließt.

12. Haltevorrichtung nach Anspruch 1,
**dadurch gekennzeichnet,**
**dass** zumindest ein Energieaufnahmemittel (10) auf der dem Unterkonstruktionsbefestigungsmittel (02) abgewandten Seite des Flächenelementbefestigungsmittels (03) an das Flächenelementbefestigungsmittel (03) anschließt, wobei das Energieaufnahmemittel (10) das Querkraftaufnahmemittel (04) im Anschluss an das Flächenelementbefestigungsmittel (03) vollständig umschließt.

13. Haltevorrichtung nach Anspruch 1,
**dadurch gekennzeichnet,**
**dass** das Energieaufnahmemittel (10) bündig mit dem dem Unterkonstruktionsbefestigungsmittel (02) abgewandten Ende (04c) des Querkraftaufnahmemittel (04) abschließt.

14. Haltevorrichtung nach Anspruch 1,
**dadurch gekennzeichnet,**
**dass** eine Mehrzahl von Flächenelementbefestigungsmitteln (03) mit einem Flächenelementbefestigungsverteilerelement (17) verbunden ist, wobei das Flächenelementbefestigungsverteilerelement (17) beweglich mit dem Querkraftaufnahmemittel (04) verbunden ist.

15. Haltevorrichtung nach Anspruch 1,
**dadurch gekennzeichnet,**
**dass** eine Mehrzahl von Flächenelementbefestigungsmitteln (03) mit jeweils einem Querkraftaufnahmemittel (04) verbunden ist, wobei die Querkraftaufnahmemittel mit einem dem Unterkonstruktionsbefestigungsmittel (02) zugeordneten Verteilerelement (02e) verbunden sind.

16. Haltevorrichtung nach Anspruch 1,
**dadurch gekennzeichnet,**
**dass** zwischen Unterkonstruktionsbefestigungsmittel (02) und einem dem Unterkonstruktionsbefestigungsmittel (02) abgewandten Ende (04c) des Querkraftaufnahmemittels (04) ein durchgängiger Kanal (16) verläuft, welcher zur Aufnahme einer elektrischen Leitung eingerichtet ist und/oder an dem dem Unterkonstruktionsbefestigungsmittel (02) abgewandten Ende (04c) des Querkraftaufnahmemittels (04) eine Leuchtvorrichtung (13) umfassend zumindest ein Leuchtmittel (14), insbesondere eine Leuchtdiode, angeordnet ist.

## Claims

1. A holding device for securing at least one flat element, comprising:
- at least one substructure securing means (02);
- at least one flat element securing means (03); and
- at least one transversal force absorbing means (04) which interconnects the substructure securing means (02) and the flat element securing means (03) and which absorbs forces that are effective in the plane defined by the flat elements,
at least one energy absorbing means (05) which absorbs energy that is introduced into the holding device (01) by forces that act perpendicularly to the plane defined by the flat elements; **characterized in that**
the energy absorbing means (05) is formed as a hollow cylinder and surrounds a cylindrical transversal force absorbing means (04), wherein the outer radius of the transversal force absorbing means (04) is marginally smaller than the inner radius of the energy absorbing means (05).

2. The holding device according to claim 1,
**characterized in that**
the flat element securing means (03) comprises means for securing façade elements, in particular laminated glass panes and/or glass panes.

3. The holding device according to claim 1,
**characterized in that**
the flat element securing means (03) comprises clamping jaws (07) which can be moved relative to each other by means of a clamping device (07d), whereby a clamping effect on a flat element is caused.

4. The holding device according to claim 1,
**characterized in that**
the clamping jaws (07) have protrusions (07a) or recesses (07b) which can engage into depressions or recesses of the flat elements or enclose protrusions of the flat elements when the clamping jaws (07) are moved relative to each other.

5. The holding device according to claim 1,
**characterized in that**
the substructure securing means (02) comprises clamping fittings (02a, 02b) for attachment at a façade substructure, in particular at a cable net façade substructure, wherein the clamping fittings can be moved relative to each other by a clamping means (02d).

6. The holding device according to claim 1,
**characterized in that**
the transversal force absorbing means (04) is realized as a guide rod and is connected to the substructure securing means (02) in a force-fitting manner.

7. The holding device according to claim 1,
**characterized in that**
the flat element securing means (03) is flexibly connected to the transversal force absorbing means (04), the connection being realized in such a manner that a motion of the flat element securing means (03) can take place transversely to the plane defined by the flat elements.

8. The holding device according to claim 1,
**characterized in that**
the energy absorbing means (05) comprises at least one deformation body (08, 09, 11, 12), which can reversibly and/or irreversibly absorb energy by elastic and/or plastic deformation.

9. The holding device according to claim 1,
**characterized in that**
the deformation body (09, 11) is realized as a spring, in particular as a disc spring, or as a hollow metal body which is filled with a metal foam filling (08a, 12a).

10. The holding device according to claim 1,
**characterized in that**
on the side of the flat element securing means (03) facing the substructure securing means (02), at least one energy absorbing means (05) is adjacent to the flat element securing means (03), the energy absorbing means (05) completely surrounding the transversal force absorbing means (04) starting from the flat element securing means (03).

11. The holding device according to claim 1,
**characterized in that**
the at least one energy absorbing means ends flush with the substructure securing means (02).

12. The holding device according to claim 1,
**characterized in that**
on the side of the flat element securing means (03) facing away from the substructure securing means (02), at least one energy absorbing means (10) is adjacent to the flat element securing means (03), wherein the energy absorbing means (10) completely surrounds the transversal force absorbing means (04) starting from the flat element securing means (03).

13. The holding device according to claim 1,
**characterized in that**
the energy absorbing means (10) ends flush with the end (04c) of the transversal force absorbing means (04) facing away from the substructure securing means (02).

14. The holding device according to claim 1,
**characterized in that**
a plurality of flat element securing means (03) is connected to a flat element securing means distributing element (17), said flat element securing means distributing element (17) being flexibly connected to the transversal force absorbing means (04).

15. The holding device according to claim 1,
**characterized in that**
a plurality of flat element securing means (03) is connected to one transversal force absorbing means (04) in each case, the transversal force absorbing means being connected to a distributing element (02e) associated with the substructure securing means (02).

16. The holding device according to claim 1,
**characterized in that**
a continuous duct (16) runs between the substructure securing means (02) and an end (04c) of the transversal force absorbing means (04) facing away from the substructure securing means (02), said duct being adapted to hold an electric line and/or on the end (04c) of the transversal force absorbing means (04) facing away from the substructure securing means (02), a lighting device (13) comprising at least one illuminant (14), in particular a light emitting diode, is arranged.

## Revendications

1. Dispositif de retenue destiné à fixer au moins un élément plat, comprenant :
- au moins un moyen de fixation de la structure porteuse (02);
- au moins un moyen de fixation d'élément plat (03); et
- au moins un moyen d'absorption des forces transversales (04) qui relie l'un avec l'autre le moyen de fixation de la structure porteuse (02) et le moyen de fixation d'élément plat (03) et par lequel des forces agissant dans le plan formé par les éléments plats sont absorbées,
au moins un moyen d'absorption d'énergie (05) qui absorbe l'énergie introduite dans le dispositif de retenue (01) par des forces agissant de manière perpendiculaire par rapport au plan formé par les éléments plats;
**caractérisé en ce que**
le moyen d'absorption d'énergie (05) est réalisé comme cylindre creux et entoure un moyen d'absorption des forces transversales (04) cylindrique, le rayon extérieur du moyen d'absorption des forces transversales (04) étant légèrement plus petit que le rayon intérieur du moyen d'absorption d'énergie (05).

2. Dispositif de retenue selon la revendication 1,
**caractérisé en ce que**
le moyen de fixation d'élément plat (03) comprend des moyens destinés à fixer des éléments de façade, notamment des plaques de verre feuilletées et/ou des plaques de verre.

3. Dispositif de retenue selon la revendication 1,
**caractérisé en ce que**
le moyen de fixation d'élément plat (03) comprend des mâchoires de serrage (07) qui peuvent être déplacées l'une par rapport à l'autre à l'aide d'un dispositif de serrage (07d), causant un effet de serrage sur un élément plat.

4. Dispositif de retenue selon la revendication 1,
**caractérisé en ce que**
les mâchoires de serrage (07) ont des protrusions (07a) ou évidements (07b) qui peuvent s'engager dans des dépressions ou évidements des éléments plats ou entourer des protrusions des éléments plats quand les mâchoires de serrage (07) sont déplacées l'une par rapport à l'autre.

5. Dispositif de retenue selon la revendication 1,
**caractérisé en ce que**
le moyen de fixation de la structure porteuse (02) comprend des ferrures de serrage (02a, 02b) destinées à être attachées à une structure porteuse de façade, notamment à une structure porteuse de façade à filets de câbles, les ferrures de serrage pouvant être déplacées l'une par rapport à l'autre à l'aide d'un moyen de serrage (02d).

6. Dispositif de retenue selon la revendication 1,
**caractérisé en ce que**
le moyen d'absorption des forces transversales (04) est réalisé comme tige de guidage et est relié avec le moyen de fixation de la structure porteuse (02) par liaison de force.

7. Dispositif de retenue selon la revendication 1,
**caractérisé en ce que**
le moyen de fixation d'élément plat (03) est relié de manière mobile avec le moyen d'absorption des forces transversales (04), la liaison étant réalisée de telle manière qu'un mouvement du moyen de fixation d'élément plat (03) peut s'effectuer transversalement par rapport au plan formé par les éléments plats.

8. Dispositif de retenue selon la revendication 1,
**caractérisé en ce que**
le moyen d'absorption d'énergie (05) comprend au moins un corps de déformation (08, 09, 11, 12), qui peut absorber de l'énergie de manière réversible et/ou irréversible par la déformation élastique et/ou plastique.

9. Dispositif de retenue selon la revendication 1,
**caractérisé en ce que**
le corps de déformation (09, 11) est réalisé comme ressort, notamment comme ressort à disque, ou comme corps métallique creux qui est rempli d'un remplissage de mousse métallique (08a, 12a).

10. Dispositif de retenue selon la revendication 1,
**caractérisé en ce que**
sur le côté du moyen de fixation d'élément plat (03) tourné vers le moyen de fixation de la structure porteuse (02), au moins un moyen d'absorption d'énergie (05) est adjacent au moyen de fixation d'élément plat (03), le moyen d'absorption d'énergie (05) entourant entièrement le moyen d'absorption des forces transversales (04) à partir du moyen de fixation d'élément plat (03).

11. Dispositif de retenue selon la revendication 1,
**caractérisé en ce que**
ledit au moins un moyen d'absorption d'énergie se termine à fleur avec le moyen de fixation de la structure porteuse (02).

12. Dispositif de retenue selon la revendication 1,
**caractérisé en ce que**
sur le côté du moyen de fixation d'élément plat (03) détourné du moyen de fixation de la structure porteuse (02), au moins un moyen d'absorption d'énergie (10) est adjacent au moyen de fixation d'élément plat (03), le moyen d'absorption d'énergie (10) entourant entièrement le moyen d'absorption des forces transversales (04) à partir du moyen de fixation d'élément plat (03).

13. Dispositif de retenue selon la revendication 1,
**caractérisé en ce que**
le moyen d'absorption d'énergie (10) se termine à fleur avec l'extrémité (04c) du moyen d'absorption des forces transversales (04) détournée du moyen de fixation de la structure porteuse (02).

14. Dispositif de retenue selon la revendication 1,
**caractérisé en ce qu'**
une pluralité de moyens de fixation d'élément plat (03) sont reliés avec un élément de distribution de moyen de fixation d'élément plat (17), ledit élément de distribution de moyen de fixation d'élément plat (17) étant relié de manière mobile avec le moyen d'absorption des forces transversales (04).

15. Dispositif de retenue selon la revendication 1,
**caractérisé en ce qu'**
une pluralité de moyens de fixation d'élément plat (03) sont reliés chacun avec un moyen d'absorption des forces transversales (04), les moyens d'absorption des forces transversales étant reliés avec un élément de distribution (02e) assigné au moyen de fixation de la structure porteuse (02).

16. Dispositif de retenue selon la revendication 1,
**caractérisé en ce qu'**
un canal continu (16) destiné à loger une ligne électrique s'étend entre le moyen de fixation de la structure porteuse (02) et une extrémité (04c) du moyen d'absorption des forces transversales (04) détournée du moyen de fixation de la structure porteuse (02) et/ou un dispositif lumineux (13) comprenant au moins une source lumineuse (14), notamment une diode lumineuse, est disposé sur l'extrémité (04c) du moyen d'absorption des forces transversales (04) détournée du moyen de fixation de la structure porteuse (02).
